# EUROPEAN PATENT APPLICATION

(11) **EP 4 750 169 A1**
(43) Date of publication of application: **27.05.2026**
(21) Application number: 25215190.7
(22) Date of filing: 12.11.2025
(51) Int. Cl.: H04W 52/02

(54) **COMMUNICATION METHOD, MASTER DEVICE, AND SLAVE DEVICE FOR EXTENDING BATTERY LIFE AND RELIABLE COMMUNICATION**

(30) Priority: 22.11.2024 CN 202411686645; 30.04.2025 CN 202510563101
(71) Applicant: Realtek Semiconductor Corp., HsinChu 30076 (TW)
(72) Inventor: ZHAO, BAOHUI, Suzhou City (CN); LI, YANG, Suzhou City (CN); HE, Dong-Yu, Suzhou City (CN); Li, Hui, Suzhou City (CN)
(74) Representative: Straus, Alexander

(57) **Abstract**

A communication method adopted by a Bluetooth system (1) is provided. The Bluetooth system (1) includes a master device (10) and a slave device (12). The communication method includes the master device (10) and the slave device (12) establishing a connection, the master device (10) sending a power-saving command (310) to the slave device (12), in response to the power-saving command (310), the slave device (12) sending a power-saving acknowledgement command (315) to the master device (10), then terminating the connection and entering a slave power-saving mode, and in response to the power-saving acknowledgement command (315), the master device (10) entering a master power-saving mode.

## Description

### Field of the Invention

The invention relates to Bluetooth systems, and in particular, to a communication method, master device and slave device in a Bluetooth system, which effectively reduce power consumption during standby, extend battery life, ensure timely and reliable communication, and enhance overall system stability.

### Background of the Invention

With the widespread adoption of Bluetooth technology, Bluetooth devices such as wireless earphones, fitness trackers, and computer mice have become integral to users' daily activities and professional environments. Owing to its low power consumption characteristics, Bluetooth has been increasingly utilized as a preferred solution for wireless communication among electronic devices.

However, in practical applications, Bluetooth devices often consume considerable power during standby or idle states, which adversely affects the battery life. Additionally, when a Bluetooth connection is interrupted or disconnected, conventional Bluetooth systems do not permit the master device to directly wake up the slave device to resume data transmission. These limitations reveal deficiencies in the energy efficiency and connection stability of existing Bluetooth technologies, thereby necessitating improvements to enhance user experience, optimize power management, and improve overall device performance.

### Summary of the Invention

The invention is set out in the appended set of claims.

### Brief Description of the Drawings

The invention is illustrated by way of example in the accompanying drawings, in which:
FIG. 1 is an architectural diagram of a Bluetooth system according to an embodiment of the present invention;
FIG. 2 is a flowchart of a communication method for use by the Bluetooth system in FIG. 1;
FIG. 3 is a message sequence chart of the communication method in FIG. 2;
FIG. 4 is a message sequence chart of the Bluetooth connection process in FIG. 3;
FIG. 5 is a flowchart of another communication method for use by the Bluetooth system in FIG. 1;
FIG. 6 is a message sequence chart of the communication method in FIG. 5;
FIG. 7 is a message sequence chart of the Bluetooth re-connection process in FIG. 6;
FIG. 8 is a flowchart of another communication method for use by the Bluetooth system in FIG. 1;
FIG. 9 is a message sequence chart of the communication method in FIG. 8; and
FIG. 10 is another message sequence chart of the communication method in FIG. 5.

### Detailed Description

As used herein, the terms "packet," "command," "advertisement," and "data" are defined as follows:
A "packet" is the basic unit for data transmission in Bluetooth communication that includes a header, payload, and checksum for conveying messages between Bluetooth devices. The packet payload may comprise data and control information.

A "command" is a Bluetooth protocol instruction that controls and manages Bluetooth device operations for device pairing, connection management, and data transmission control.

An "advertisement" is a periodic transmission by which a Bluetooth device announces its presence and capabilities to enable discovery and connection by other Bluetooth devices.

"Data" refers to information content transmitted via Bluetooth communication, including text, audio, video, images, and other digital information.

The packets serve as the transmission carriers for Bluetooth communications. The commands, advertisements, and data must be encapsulated within the packets for transmission between devices. The commands are control instructions embedded within packets to manage Bluetooth device operations. The advertisement packets announce a Bluetooth device's presence and capabilities, enabling discovery and connection establishment by other Bluetooth devices. The data represents the actual information content transmitted within packets and may be included in either advertisement packets or data packets transferred after connection establishment.

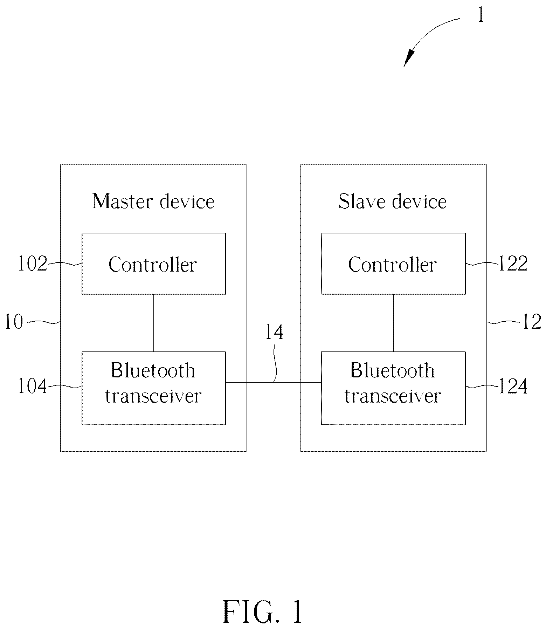

FIG. 1 is an architectural diagram of a Bluetooth system 1 according to an embodiment of the present invention. The Bluetooth system 1 may include a master device 10 and a slave device 12 that communicate using Bluetooth Low Energy (BLE) technology. The master device 10 may be coupled to the slave device 12 via a Bluetooth connection 14. The master device 10 may be a smartphone, tablet computer, or laptop computer having data processing capabilities and multiple communication interfaces. The slave device 12 may be a Bluetooth headset, smart watch, Bluetooth mouse, or Bluetooth keyboard that is compact in size and adapted to perform specialized functions.

The master device 10 may include a controller 102 and a Bluetooth transceiver 104, with the controller 102 coupled to the Bluetooth transceiver 104. The controller 102 may include, but is not limited to, a central processing unit (CPU) configured to perform power management, to package and parse data in accordance with Bluetooth communication protocols, to control Bluetooth scanning, pairing, and data transmission, to execute operating systems and application programs, and to perform other Bluetooth functions. The Bluetooth transceiver 104 may be a Bluetooth module configured to receive and transmit Bluetooth packets. Furthermore, the Bluetooth transceiver 104 may support multiple Bluetooth protocols to facilitate communication with the slave device 12.

Similarly, the slave device 12 may include a controller 122 and a Bluetooth transceiver 124, with the controller 122 coupled to the Bluetooth transceiver 124. The controller 122 may include, but is not limited to, a microcontroller unit (MCU) configured to perform power management operations, to package and parse data in accordance with Bluetooth communication protocols, to control Bluetooth operations including scanning, pairing, and data transmission; and to execute other Bluetooth-related functions. The Bluetooth transceiver 124 may be configured to exchange Bluetooth packets with the Bluetooth transceiver 104 via the Bluetooth connection 14.

The master device 10 and the slave device 12 implement power-saving mechanisms to reduce power consumption during standby periods and to extend battery life. Additionally, the master device 10 and the slave device 12 support bidirectional wake-up functionality, thereby preventing loss of commands and ensuring timely and reliable communication. The power-saving mechanism of the Bluetooth system 1 may facilitate reliable transmission of the commands and enhance overall system stability. When the Bluetooth system 1 is in an idle state, both the master device 10 and the slave device 12 enter power-saving modes and suspend the Bluetooth connection 14, thereby reducing standby power consumption. Upon initialization of communication, the Bluetooth system 1 provides two flexible wake-up methods:
Power-saving mode A: The slave device 12 may re-establish a connection with the master device 10 via a standard Bluetooth reconnection mechanism and wake up the master device 10; and
Power-saving mode B: The master device 10 and the slave device 12 may actively wake up each other via an over-the-air wake-up technology, wherein the master device 10 may actively wake up the slave device 12, and the slave device 12 may also actively wake up the master device 10.

Upon wake-up, the master device 10 and the slave device 12 may re-establish the Bluetooth connection 14, transmit one or more commands to trigger the master device 10 and the slave device 12 to exit their respective power-saving modes, and initiate data transmission following both the mater device 10 and the slave device confirming successful exits from the power-saving modes.

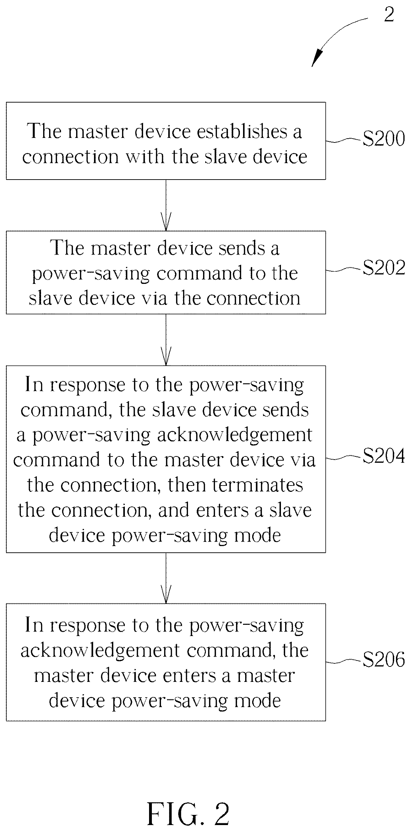

FIG. 2 is a flowchart of a communication method 2 for use by the Bluetooth system 1. The method 2 includes Steps S200 to S206 to enable the master device 10 and the slave device 12 to enter power-saving modes. Any reasonable technical modifications or step adjustments are within the scope of the present invention. Steps S200 to S206 are described as follows:
Step S200: The master device establishes a connection with the slave device.
Step S202: The master device sends a power-saving command to the slave device via the connection.
Step S204: In response to the power-saving command, the slave device sends a power-saving acknowledgement command to the master device via the connection, then terminates the connection, and enters a slave power-saving mode.
Step S206: In response to the power-saving acknowledgement command, the master device enters a master power-saving mode.

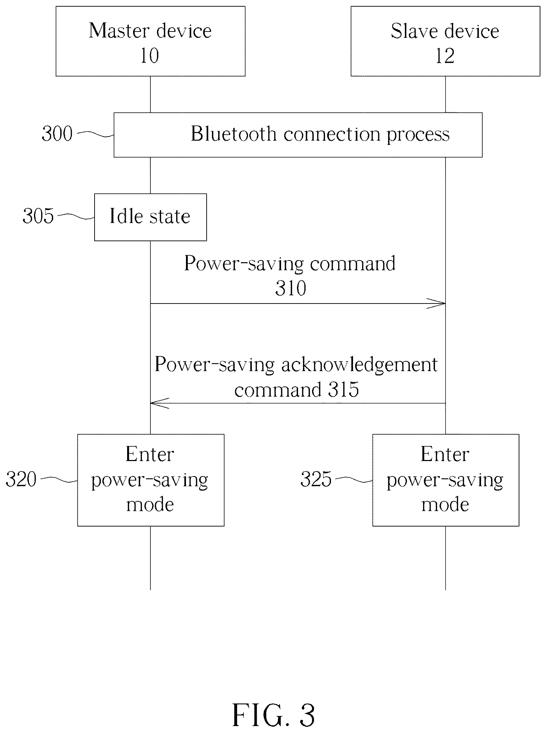

FIG. 3 is a message sequence chart of the communication method 2. The communication method 2 is now discussed with reference to FIG. 3.

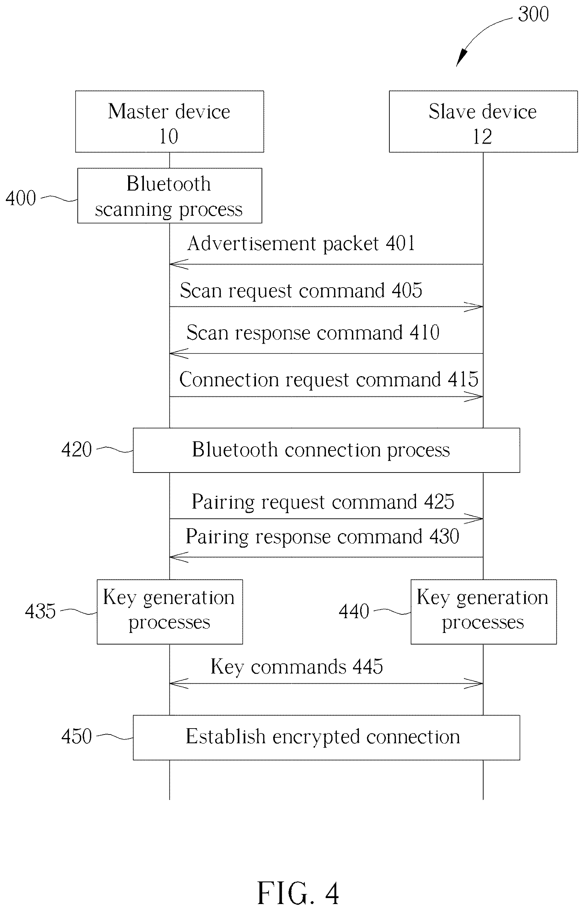

Initially, the master device 10 and the slave device 12 execute a Bluetooth connection process 300 to establish the Bluetooth connection 14 (Step S200). The Bluetooth connection process 300 may include a scanning advertisement phase, a connection phase, and a pairing phase. FIG. 4 illustrates a message sequence chart of the Bluetooth connection process 300, which is discussed in detail with reference to FIG. 4.

During the scanning advertisement phase, the master device 10 initiates a Bluetooth scanning process 400, wherein the master device 10 continuously monitors for advertisement packets transmitted from the slave device 12. The slave device 12 subsequently transmits an undirected, scannable, and connectable advertisement packet 401. Upon receipt of the advertisement packet 401, the master device 10 transmits a scan request command 405 to the slave device 12, and the slave device 12 responds immediately with a scan response command 410.

During the connection phase, the master device 10 transmits a connection request command 415 to the slave device 12, thereby initiating a Bluetooth connection process 420 to establish the Bluetooth connection 14 between the master device 10 and the slave device 12.

After the Bluetooth connection 14 is established, the master device 10 and the slave device 12 enter the pairing phase. The master device 10 transmits a pairing request command 425 to the selected slave device 12, and the slave device 12 responds with a pairing response command 430. Subsequently, the master device 10 and the slave device 12 initiate respective key generation processes 435 and 440. Upon successful exchange of key commands 445, an encrypted connection 450 is established within the Bluetooth connection 14, thereby ensuring secure communication.

At this stage, the Bluetooth connection process 300 is complete. The master device 10 and the slave device 12 may store each other's pairing information to facilitate automatic reconnection when within an effective communication range, without requiring re-pairing. The master device 10 and the slave device 12 may perform data transmission via the encrypted connection 450 in accordance with Bluetooth protocol, wherein the transmitted data may include, for example, audio streams, files, or Bluetooth management data. Through the structured message exchange and encryption mechanisms, the Bluetooth system 1 maintains communication security while reducing power consumption.

Referring to FIG. 3, after the master device 10 and the slave device 12 cease data transmission for a predetermined duration, the master device 10 transitions into an idle state 305 and subsequently transmits a power-saving command 310 to the slave device 12 (Step S202). The power-saving command 310 may include power-saving mode information configured to prompt the slave device 12 to enter a slave power-saving mode. Specifically, the power-saving mode information may indicate either the power-saving mode A or the power-saving mode B.

The power-saving mode A may correspond to a standard Bluetooth power-saving mode, whereas the power-saving mode B may correspond to a power-saving mode that supports over-the-air wake-up functionality. In the power-saving mode A, the master device 10 is unable to actively initiate wake-up of the slave device 12 and may only be awakened by the slave device 12. In contrast, the power-saving mode B enables bidirectional wake-up functionality, wherein the master device 10 may actively initiate wake-up of the slave device 12, and the slave device 12 may likewise actively initiate wake-up of the master device 10.

In response to the power-saving command 310, the slave device 12 transmits a power-saving acknowledgement command 315 to the master device 10, subsequently disconnects the Bluetooth connection 14, and enters the slave power-saving mode 325 (Step S204). The power-saving acknowledgement command 315 serves to acknowledge successful receipt of the power-saving command 310 by the slave device 12. The slave power-saving mode 325 may correspond to either the power-saving mode A or the power-saving mode B.

In the power-saving mode A, the slave device 12 enters a standard Bluetooth power-saving mode in which both the controller 122 and the Bluetooth transceiver 124 are disabled. In the power-saving mode B, the slave device 12 enters a power-saving mode configured to support over-the-air wake-up functionality. In the power-saving mode B, both the controller 122 and the Bluetooth transceiver 124 are disabled and periodically awakened to transmit advertisement packets. The advertisement packets may be undirected, scannable, and non-connectable advertisement packets, which may be received and processed by any Bluetooth-enabled device within the transmission range, but do not permit active establishment of a Bluetooth connection with the slave device 12.

In response to the power-saving acknowledgement command 315, the master device 10 enters a master power-saving mode 320 (Step S206). In the master power-saving mode 320, the master device 10 transitions into a standard Bluetooth power-saving mode in which both the controller 102 and the Bluetooth transceiver 104 are disabled.

Upon completion of the communication method 2, both the master device 10 and the slave device 12 enter the respective power-saving modes, thereby reducing the overall power consumption and extending the battery life.

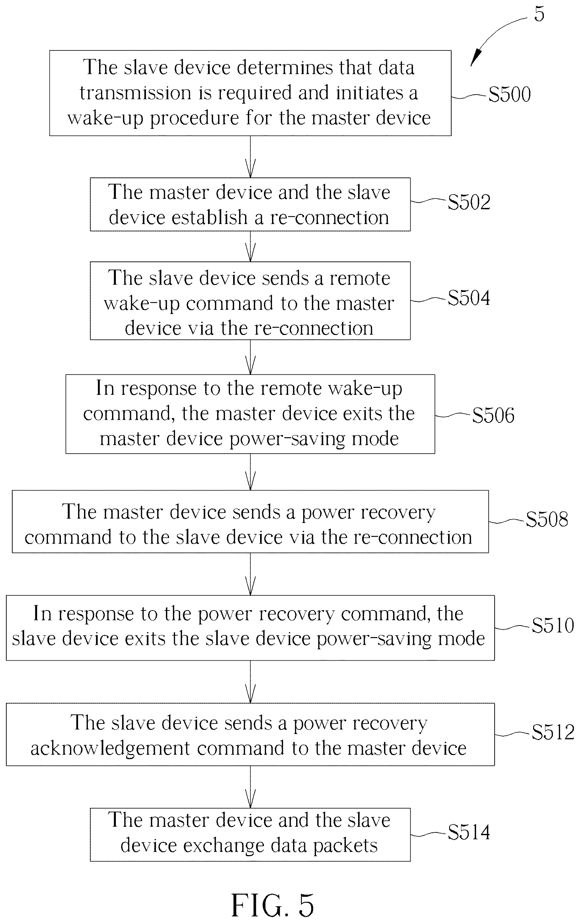

FIG. 5 is a flowchart of another communication method 5 for use by the Bluetooth system 1. The communication method 5 includes Steps S500 to S514 to awaken the master device 10 by the slave device 12 while operating in the power-saving mode A or B. Any reasonable technical modifications or step adjustments are within the scope of the present invention. Steps S500 to S514 are described as follows:
Step S500: The slave device determines that data transmission is required and initiates a wake-up procedure for the master device.
Step S502: The master device and the slave device establish a re-connection.
Step S504: The slave device sends a remote wake-up command to the master device via the re-connection.
Step S506: In response to the remote wake-up command, the master device exits the master power-saving mode.
Step S508: The master device sends a power recovery command to the slave device via the re-connection.
Step S510: In response to the power recovery command, the slave device exits the slave power-saving mode.
Step S512: The slave device sends a power recovery acknowledgement command to the master device.
Step S514: The master device and the slave device exchange data packets.

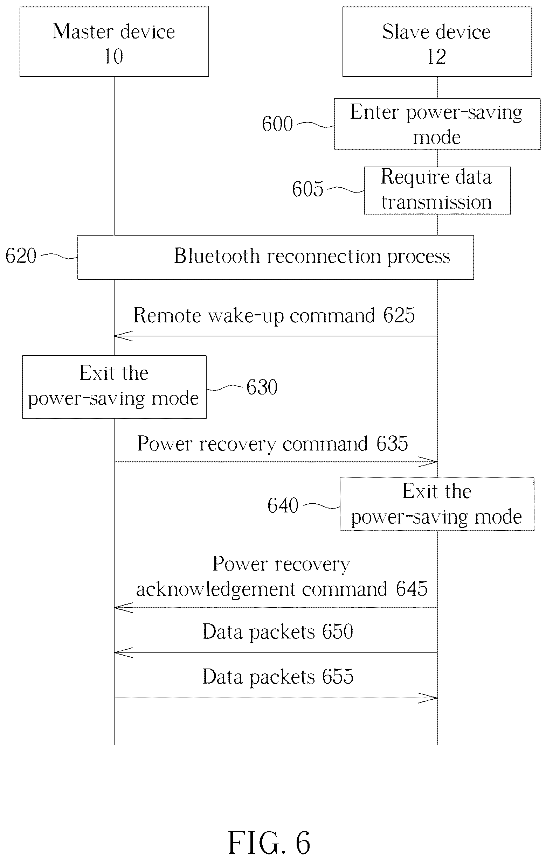

FIG. 6 illustrates a message sequence chart of the communication method 5, applicable to the power-saving mode A, wherein the slave device 12 initiates wake-up of the master device 10. The communication method 5 is now discussed with reference to FIG. 6.

Initially, the master device 10 enters a master power-saving mode, and the slave device 12 enters a slave power-saving mode 600 corresponding to the power-saving mode A. After entering the slave power-saving mode 600, the slave device 12 determines that a data transmission procedure 605 is required, thus requiring to awaken the master device 10 (Step S500).

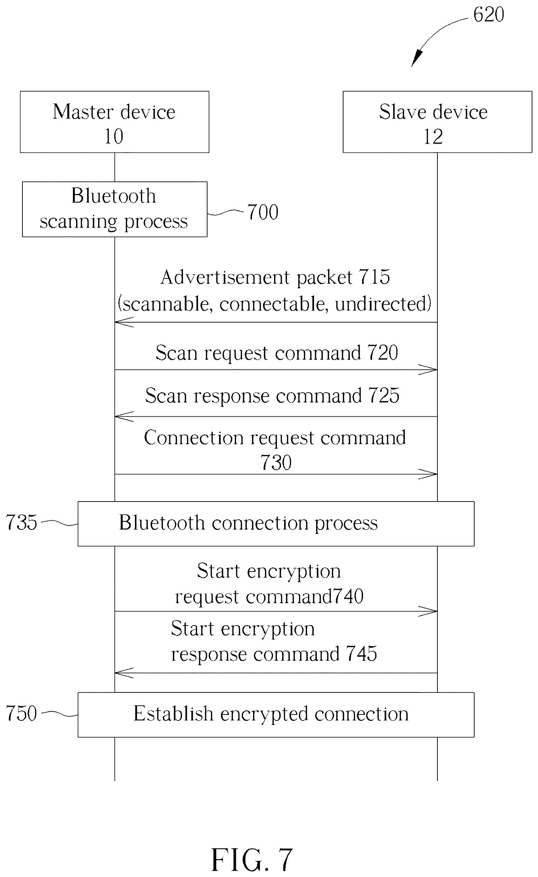

Subsequently, the slave device 12 initiates a Bluetooth reconnection process 620. The Bluetooth reconnection process 620 differs from the Bluetooth connection process 300. FIG. 7 is a message sequence chart of the Bluetooth reconnection process 620.

Referring to FIG. 7, the Bluetooth reconnection process 620 commences when the master device 10 initiates a Bluetooth scanning process 700. During the Bluetooth scanning process 700, the master device 10 periodically transitions from the power-saving mode to an active state to detect advertisement packets. Specifically, although operating in the power-saving mode, the master device 10 intermittently awakens at a reduced scanning frequency to perform advertisement packet detection. This scanning behavior contributes to reduced energy consumption and extended battery life.

Upon initiation of the scanning process 700, the slave device 12 enters an advertisement mode and transmits an undirected, scannable, and connectable advertisement packet 715. Upon receipt of the advertisement packet 715, the master device 10 transmits a scan request command 720 to the slave device 12. In response, the slave device 12 returns a scan response command 725 to the master device 10.

Following the exchange of scan commands, the master device 10 transmits a connection request command 730 to the slave device 12 and executes a Bluetooth connection process 735 to re-establish the Bluetooth connection 14 (Step S502). Upon successful re-establishment of the Bluetooth connection 14, the master device 10 immediately transmits a start encryption request command 740. The slave device 12 responds with a start encryption response command 745.

Subsequently, both the master device 10 and the slave device 12 utilize a previously established encryption key that is generated during an earlier pairing procedure to perform encryption, thereby establishing an encrypted connection 750 within the Bluetooth connection 14. Upon completion of the encryption procedure, the Bluetooth reconnection process 620 is complete.

The Bluetooth reconnection process 620 enhances reconnection efficiency and ensures communication security by employing the two-stage procedure involving the advertisement mechanism and the rapid encryption mechanism. In contrast to the initial Bluetooth connection process 300, the Bluetooth reconnection process 620 omits the pairing and key generation stages, instead leveraging stored pairing information to speed up the establishment of the encrypted connection 750. As a result, the Bluetooth reconnection process 620 eliminates the need for re-pairing operations and avoids reliance on manual input mechanisms such as button activation.

Referring to FIG. 6, upon completion of the Bluetooth reconnection process 620, the slave device 12 transmits a remote wake-up command 625 to the master device 10 via the Bluetooth connection 14 (Step S504), thereby actively initiating a wake-up operation for the master device 10. In response to the remote wake-up command 625, the master device 10 exits the master power-saving mode 630 (Step S506), wherein both the controller 102 and the Bluetooth transceiver 104 of the master device 10 are enabled.

Following activation of the master device 10, the master device 10 transmits a power recovery command 635 to the slave device 12 via the Bluetooth connection 14 (Step S508) to initiate a corresponding wake-up operation for the slave device 12. In response to the power recovery command 635, the slave device 12 exits the slave power-saving mode 640 (Step S510), wherein both the controller 122 and the Bluetooth transceiver 124 of the slave device 12 are enabled.

Subsequently, the slave device 12 transmits a power recovery acknowledgement command 645 to the master device 10 (Step S512), thereby confirming receipt and execution of the power recovery command 635. Upon completion of the mutual wake-up operations, both the master device 10 and the slave device 12 transition to a normal operating mode, wherein data packets 650 and 655 are exchanged via the Bluetooth connection 14.

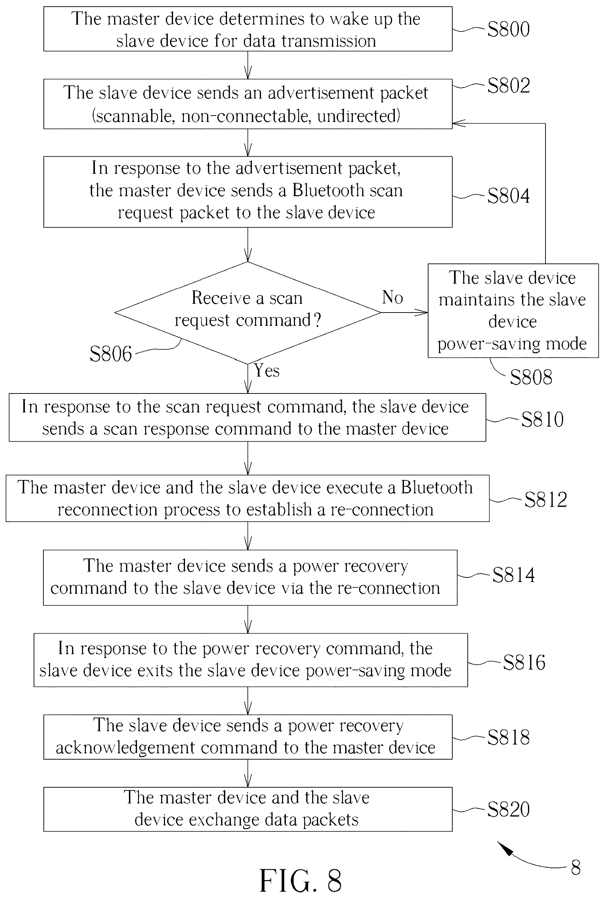

FIG. 8 is a flowchart of another communication method 8 for use by the Bluetooth system 1. The communication method 8 includes Steps S800 to S820 to awaken the slave device 12 by the master device 10 while operating in the power-saving mode B. Any reasonable technical modifications or step adjustments are within the scope of the present invention. Steps S800 to S820 are described as follows:
Step S800: The master device determines to wake up the slave device for data transmission.
Step S802: The slave device sends an advertisement packet.
Step S804: In response to the advertisement packet, the master device sends a Bluetooth scan request packet to the slave device.
Step S806: The slave device determines whether a scan request command is received? If so, continue to Step S810; if not, continue to Step S808.
Step S808: The slave device maintains the slave power-saving mode; return to Step S802.
Step S810: In response to the scan request command, the slave device sends a scan response command to the master device.
Step S812: The master device and the slave device execute a Bluetooth reconnection process to establish a re-connection.
Step S814: The master device sends a power recovery command to the slave device via the re-connection.
Step S816: In response to the power recovery command, the slave device exits the slave power-saving mode.
Step S818: The slave device sends a power recovery acknowledgement command to the master device.
Step S820: The master device and the slave device exchange data packets.

In Step S802, the slave device 12 periodically transitions from a power-saving mode to an active state, wherein the controller 122 and the Bluetooth transceiver 124 are temporarily enabled. During each active interval, the slave device 12 transmits a scannable, non-connectable, undirected advertisement packet. Immediately following transmission of the advertisement packet, the slave device 12 opens a reception window of a predetermined duration to monitor for a response from the master device 10.

In Step S806, the slave device 12 determines whether a scan request command has been received from the master device 10 within the reception window. If the scan request command is not received, the slave device 12 re-enters the power-saving mode (Step S808) and resumes periodic wake-up operations only when the next advertisement packet is scheduled for transmission (returning to Step S802)

In the Bluetooth reconnection process of Step S812, the slave device 12 periodically awakens from the power-saving mode to transmit scannable, connectable, undirected advertisement packets. These packets facilitate re-establishment of an encrypted Bluetooth connection with the master device 10

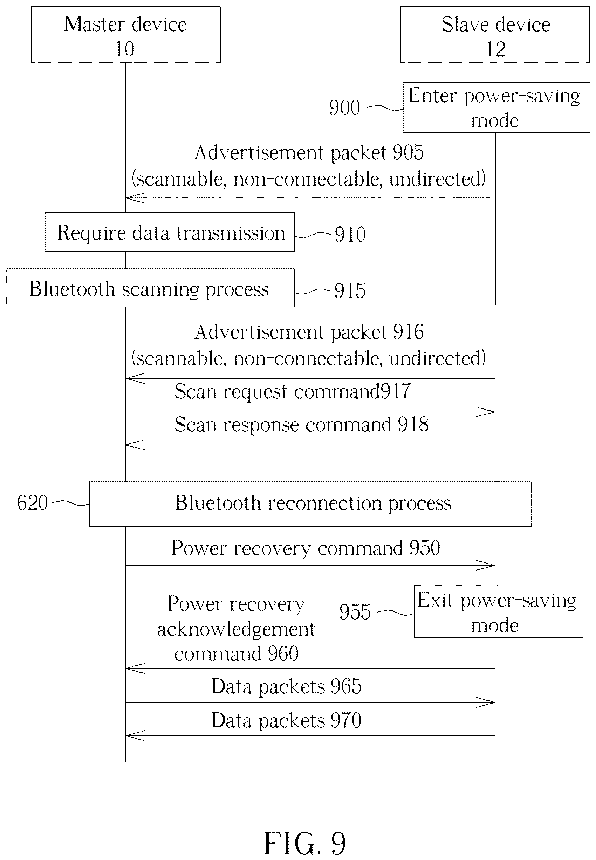

The actual operation of Steps S800 to S820 may be shown in FIG. 9.

FIG. 9 is a message sequence chart illustrating the communication method 8. The communication method 8 is now discussed with reference to FIG. 9.

Initially, the master device 10 enters a master power-saving mode, and the slave device 12 enters a slave power-saving mode 900 (power-saving mode B). While operating in the power-saving mode B, the slave device 12 periodically transitions to an active state to transmit a scannable, non-connectable, undirected advertisement packet 905.

Following transmission of each advertisement packet 905, the slave device 12 opens a reception window for a predetermined duration to monitor for a response from the master device 10. If no response is detected within the reception window, the slave device 12 re-enters the power-saving mode B and remains in a low-power state until the next scheduled advertisement transmission cycle.

Following the advertisement transmission, the master device 10 determines that a data transmission operation 910 is required, thus initiating activation of the slave device 12 (Step S800). In response, the master device 10 transitions from a power-saving mode to an active state, wherein the controller 102 and the Bluetooth transceiver 104 are enabled. Subsequently, the master device 10 initiates a Bluetooth scanning process 915. During the Bluetooth scanning process 915, the master device 10 continuously monitors for undirected, scannable, non-connectable advertisement packets transmitted by the slave device 12 (Step S802).

Upon receipt of the advertisement packet 916 by the master device 10, the master device 10 transmits a scan request command 917 to the slave device 12 (Step S804) in order to initiate a Bluetooth reconnection process 620. In response to receiving the scan request command 917 (Step S806), the slave device 12 accesses a paired whitelist stored in the internal memory thereof to identify the master device 10 that issued the scan request command 917. Based on the result of the identification, the slave device 12 generates a corresponding scan response command 918 (Step S810).

If the master device 10 is identified as a paired device listed in the whitelist, the slave device 12 includes pairing information within the scan response command 918 and proceeds to activate the Bluetooth reconnection process 620, thereby transitioning to a connectable state. Conversely, if the master device 10 is determined to be an unpaired device not present in the whitelist, the slave device 12 includes unpaired information in the scan response command 918 and maintains operation in the power-saving mode B without initiating the Bluetooth reconnection process 620, thereby conserving power.

Accordingly, the slave device 12 selectively activates the higher power-consuming Bluetooth reconnection process 620 only for authorized master devices 10, thereby effectively extending the battery life of the slave device 12. Referring to FIG. 9, the master device 10 is identified as a paired device within the whitelist, and thus the scan response command 918 includes pairing information, resulting in activation of the Bluetooth reconnection process 620 (Step S812).

The Bluetooth reconnection process 620 is illustrated in FIG. 7. The Bluetooth reconnection process 620 includes the following steps: the slave device 12 transmits an undirected, scannable, and connectable advertisement packet 715; upon receipt of the advertisement packet 715, the master device 10 transmits a scan request command 720 to the slave device 12; the slave device 12 then responds with a scan response command 725.

Subsequently, the master device 10 transmits a connection request command 730 and initiates a Bluetooth connection process 735 with the slave device 12 to re-establish the Bluetooth connection 14. Upon successful re-establishment of the Bluetooth connection 14, the master device 10 immediately transmits a start encryption request command 740, to which the slave device 12 responds with a start encryption response command 745. Thereafter, both the master device 10 and the slave device 12 utilize a previously established pairing key to encrypt the connection, thereby forming an encrypted connection 750 within the Bluetooth connection 14.

The Bluetooth reconnection process 620 thus is completed. By employing the Bluetooth reconnection process 620, the system enables rapid restoration of the Bluetooth connection 14 with the master device 10 without necessitating re-pairing operations or manual button interactions, thereby enhancing user convenience and operational efficiency.

Upon awakening, the master device 10 transmits a power recovery command 950 to the slave device 12 via the Bluetooth connection 14 (Step S814), thereby initiating the wake-up process of the slave device 12. In response to the power recovery command 950, the slave device 12 exits the power-saving mode 955 (Step S816), at which point both the controller 122 and the Bluetooth transceiver 124 are enabled. Following this transition, the slave device 12 transmits a power recovery acknowledgement command 960 to the master device 10 to acknowledge receipt of the power recovery command 950 (Step S818).

At this stage, both the master device 10 and the slave device 12 have transitioned to a normal operating mode and proceed to exchange data packets 965 and 970 via the Bluetooth connection 14 (Step S820).

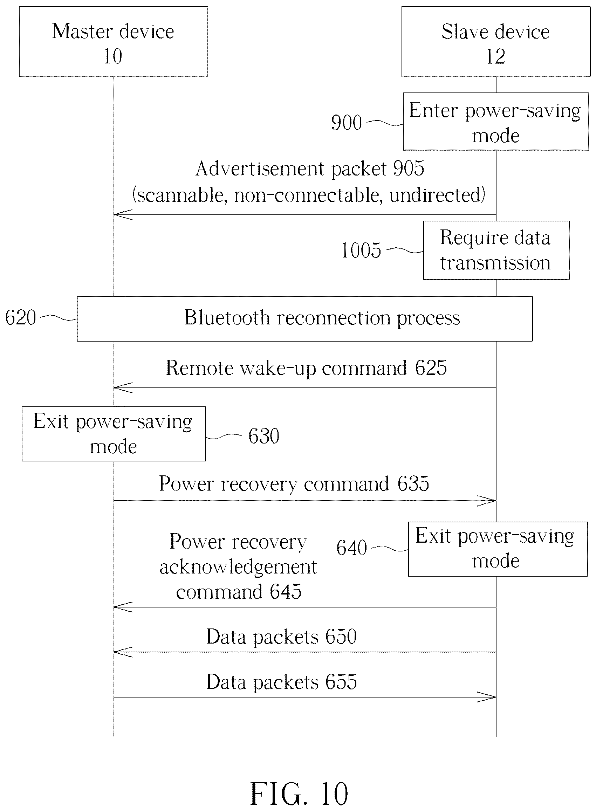

Although FIGs. 8 and 9 depict embodiments in which the master device 10 initiates the wake-up of the slave device 12 under the power-saving mode B, those skilled in the art would recognize that alternative implementations may be employed in accordance with the principles of the present invention. For example, the slave device 12 may be configured to initiate the wake-up of the master device 10 under the power-saving mode B utilizing over-the-air wake-up technology, as illustrated in FIG. 10.

FIG. 10 illustrates an alternative message sequence chart of the communication method 5, applicable to the power-saving mode B, wherein the slave device 12 initiates the wake-up of the master device 10. The communication method 5 will now be discussed with reference to FIG. 10. Initially, the master device 10 enters a master power-saving mode, while the slave device 12 enters a slave power-saving mode 900 (i.e., power-saving mode B). During the power-saving mode B, the slave device 12 periodically transmits scannable, non-connectable, undirected advertisement packets 905. If no response is detected from the master device 10 within the reception window, the slave device 12 re-enters the power-saving mode and awaits the next scheduled advertisement transmission.

Following the advertisement transmission, the slave device 12 determines that a data transmission operation 1005 is required and initiates the wake-up of the master device 10 (Step S500). In response, the slave device 12 initiates the Bluetooth reconnection process 620 to re-establish an encrypted Bluetooth connection 14 (Step S502). Once the Bluetooth connection 14 is re-established, the slave device 12 transmits a remote wake-up command 625 to the master device 10 via the Bluetooth connection 14 (Step S504), thereby actively initiating the wake-up of the master device 10. Upon receipt of the remote wake-up command 625, the master device 10 exits the master power-saving mode 630 (Step S506).

Upon awakening, the master device 10 transmits a power recovery command 635 to the slave device 12 via the Bluetooth connection 14 (Step S508), thereby initiating the wake-up process of the slave device 12. In response to the power recovery command 635, the slave device 12 exits the slave power-saving mode 640 (Step S510). Subsequently, the slave device 12 transmits a power recovery acknowledgement command 645 to the master device 10 to acknowledge receipt of the power recovery command 635 (Step S512).

Once both the master device 10 and the slave device 12 have transitioned to normal operating modes, data packets 650 and 655 are exchanged between the devices via the Bluetooth connection 14.

It should be noted that the present invention is not limited to implementation within Bluetooth communication systems. Those skilled in the art would recognize that the power management techniques disclosed herein may be adapted for use with other suitable communication protocols. Communication devices may be configured in accordance with the principle and scope of the present invention to enter power-saving modes during idle periods and to be awakened when data transmission is required, thereby optimizing power consumption and enhancing system efficiency.

The embodiments of this invention disclose a Bluetooth power-saving mechanism that effectively addresses the issue of excessive power consumption in Bluetooth devices during idle states, as well as the technical limitation wherein master devices are unable to actively wake up slave devices. By enabling slave devices to continue transmitting advertisement packets after entering the power-saving mode, and by incorporating over-the-air wake-up technology, the disclosed mechanism allows the master and slave devices to maintain connectivity while in the power-saving mode, without reliance on manual button operations. These embodiments leverages the existing data packet format defined by Bluetooth protocol to facilitate communication without requiring maintaining connections on fixed frequency channels, thereby demonstrating both technical feasibility and practical applicability. In contrast to traditional Bluetooth device, which typically cease advertisement transmissions following pairing, the proposed technique extends the battery life while preserving user convenience.

## Claims

1. A communication method adopted by a Bluetooth system (1), **characterized by** the Bluetooth system (1) comprising a master device (10) and a slave device (12), the method comprising:
establishing a connection between the master device (10) and the slave device (12);
the master device (10) sending a power-saving command (310) to the slave device (12) via the connection;
in response to the power-saving command (310), the slave device (12) sending a power-saving acknowledgement command (315) to the master device (10) via the connection, then terminating the connection, and entering a slave power-saving mode; and
in response to the power-saving acknowledgement command (315), the master device (10) entering a master power-saving mode.

2. The method of claim 1, **characterized by** further comprising:
establishing a re-connection between the master device (10) and the slave device (12); and
the slave device (12) triggering the master device (10) to exit the master power-saving mode via the re-connection.

3. The method of claim 2, **characterized in that** the slave device (12) triggering the master device (10) to exit the master device (10) power-saving mode via the re-connection comprises:
the slave device (12) sending a remote wake-up command (625) to the master device (10) via the re-connection; and
in response to the remote wake-up command (625), the master device (10) exiting the master power-saving mode.

4. The method of claim 2, **characterized by** further comprising:
the master device (10) sending a power recovery command (635, 950) to the slave device (12) via the re-connection; and
in response to the power recovery command (635, 950), the slave device (12) exiting the slave power-saving mode.

5. The method of claim 1, **characterized by** further comprising:
the slave device (12) sending an advertisement packet (715); and
in response to the advertisement packet (715), the slave device (12) monitoring for a scan request command (720) in a reception window.

6. The method of claim 5, **characterized by** further comprising:
the master device (10) exiting the master power-saving mode;
in response to the advertisement packet (715), the master device (10) sending the scan request command (720) to the slave device (12) in the reception window;
in response to the scan request command (720), the slave device (12) sending a scan response command (725) to the master device (10); and
after the master device (10) receives the scan response command (725), establishing a re-connection between the master device (10) and the slave device (12).

7. The method of claim 6, **characterized by** further comprising:
the master device (10) sending a power recovery command (635, 950) to the slave device (12) via the re-connection; and
in response to the power recovery command (635, 950), the slave device (12) exiting the slave power-saving mode.

8. A master device (10) in a Bluetooth system (1), **characterized by** the master device (10) comprising:
a controller configured to control a power-saving mode of the master device (10); and
a Bluetooth transceiver coupled to the controller and configured to transmit and receive Bluetooth packets;
wherein:
the master device (10) establishes a connection with a slave device (12);
the Bluetooth transceiver sends a power-saving command (310) to the slave device (12) via the connection;
after sending the power-saving command (310), the Bluetooth transceiver receives a power-saving acknowledgement command (315) from the slave device (12) via the connection; and
in response to the power-saving acknowledgement command (315), the controller configures the master device (10) to enter the power-saving mode.

9. The master device (10) of claim 8, **characterized in that:**
the master device (10) further establishes a re-connection with the slave device (12);
the Bluetooth transceiver further receives a remote wake-up command (625) from the slave device (12) via the re-connection; in response to the remote wake-up command (625), the master device (10) further exits the power-saving mode; and
the Bluetooth transceiver further sends a power recovery command (635, 950) to the slave device (12) via the re-connection.

10. The master device (10) of claim 8, **characterized in that:**
the master device (10) further exits the power-saving mode;
the Bluetooth transceiver further receives an advertisement packet (715) from the slave device (12); and
in response to the advertisement packet (715), the Bluetooth transceiver further sends a scan request command (720) to the slave device (12) in a reception window.

11. The master device (10) of claim 10, **characterized in that:**
after sending the scan request command (720), the Bluetooth transceiver further receives a scan response command (725) from the slave device (12);
after the master device (10) receives the scan response command (725), the master device (10) further establishes a re-connection with the slave device (12); and
the Bluetooth transceiver further sends a power recovery command (635, 950) to the slave device (12) via the re-connection.

12. A slave device (12) in a Bluetooth system (1), **characterized by** the slave device (12) comprising:
a controller configured to control a power-saving mode of the slave device (12); and
a Bluetooth transceiver coupled to the controller and configured to transmit and receive Bluetooth packets;
wherein:
the slave device (12) establishes a connection with a master device (10);
the Bluetooth transceiver receives a power-saving command (310) via the connection;
in response to the power-saving command (310), the slave device (12) sends a power-saving acknowledgement command (315) to the master device (10) via the connection, then terminates the connection; and
the controller configures the slave device (12) to enter the power-saving mode.

13. The slave device (12) of claim 12, **characterized in that:**
the master device (10) and the slave device (12) further establish a re-connection;
the Bluetooth transceiver further sends a remote wake-up command (625) to the master device (10) via the re-connection;
after sending the remote wake-up command (625), the Bluetooth transceiver further receives a power recovery command (635, 950) from the master device (10) via the re-connection; and
in response to the power recovery command (635, 950), the controller further configures the slave device (12) to exit the power-saving mode.

14. The slave device (12) of claim 12, **characterized in that:**
the Bluetooth transceiver further sends an advertisement packet (715);
in response to the advertisement packet (715), the controller further monitors for a scan request command (720) in a reception window;
if the scan request command (720) is detected, the Bluetooth transceiver further sends a scan response command (725) to the master device (10); and
after sending the scan response command (725), the master device (10) and the slave device (12) further establish a re-connection.

15. The slave device (12) of claim 14, **characterized in that:**
the Bluetooth transceiver further receives a power recovery command (635, 950) from the master device (10) via the re-connection; and
in response to the power recovery command (635, 950), the controller further configures the slave device (12) to exit the power-saving mode.
